# EUROPÄISCHE PATENTSCHRIFT

(11) **EP 0 745 512 B1**
(45) Veröffentlichungstag und Bekanntmachung des Hinweises auf die Patenterteilung: **24.10.2001**
(21) Anmeldenummer: 96106078.7
(22) Anmeldetag: 18.04.1996
(51) Int. Cl.: B60Q 1/30

(54) **Leuchteneinrichtung für Kraftfahrzeuge**
Vehicle lighting device
Dispositif de feux pour véhicule

(30) Priorität: 03.06.1995 DE 19520524
(43) Veröffentlichungstag der Anmeldung: 04.12.1996
(73) Patentinhaber: Volkswagen Aktiengesellschaft, 38436 Wolfsburg (DE)
(72) Erfinder: Gerdes, Jann, 38440 Wolfsburg (DE)

(56) Entgegenhaltungen:
- US-A- 4 724 515

## Beschreibung

Die Erfindung betrifft eine Leuchteneinrichtung gemäß den Oberbegriffen der Ansprüche 1 und 9.

In dem deutschen Gebrauchsmuster 81 07 034 ist eine im oberen Bereich der Heckscheibe angeordnete Leuchte mit einem an der Karosserie-Innenwandung ausgebildeten Leuchtengehäuse beschrieben, wobei die Leuchte nach hinten gerichtet ist.

Des weiteren ist aus der deutschen Offenlegungsschrift DE 42 43 173 A1 eine Leuchtenanordnung für eine hochgesetzte Bremsleuchte bekannt, bei dem das die Leuchte aufnehmende Gehäuse reflektorartig ausgebildet ist. Selbst wenn die Leuchtenanordnung, wie in dem Gebrauchsmuster 81 07 034, direkt an der oberen Karosserie-Innenwandung angeordnet ist, nimmt sie einen großen Bauraum ein, der die Sicht nach hinten beeinträchtigt. Außerdem ist die Lichtaustrittsöffnung durch die Leuchtengröße und die Reflektorform des Gehäuses vorgegeben.

Um diesen Nachteil zu beseitigen, ist es des weiteren bekannt, statt herkömmliche Leuchten LEDs einzusetzen, die zwar die Verwendung eines kleinbauenden Gehäuses mit einer kleinen Lichtaustrittsöffnung zulassen, aber sehr kostspielig sind und nur eine geringe Lichtausbeute haben.

Ferner ist aus US 4,724,515 eine gattungsgemässe Bremsleuchte bekannt, die mit Hilfe einer Lüftung ein beschlagen einer Lichtscheibe verhindert und bei der das das Leuchtmittel aufnehmende Teil einen größeren Querschnitt aufweist wie das den Lichtaustrittskanal bildende Teil.

Der Erfindung liegt die Aufgabe zugrunde, eine gattungsgemäße Leuchteneinrichtung für Kraftfahrzeuge mit einer herkömmlichen Leuchte zu schaffen, die formschön und weitgehend ohne Sichtbehinderung im Kraftfahrzeug angeordnet werden kann und deren Lichtaustrittsöffnung den Erfordernissen entsprechend wählbar ist.

Die Aufgabe wird durch die in den unabhängigen Ansprüchen 1 und 8 kennzeichnenden Merkmalen des Patentanspruchs gelöst. Vorteilhafte Weiterbildungen sind in den Unteransprüchen dargestellt.

Erfindungsgemäß nach Anspruch 1 ist vorgesehen, daß die Lichtaustrittsöffnung des Aufnahmegehäuses mit einem lichtdurchlässigen Bereich im gefärbten Bereich der Heckscheibe korrespondieren. Dies hat den Vorteil, daß das Aufnahmegehäuse nicht abdichtend an der Heckscheibe angeordnet werden muß, um ein undefiniertes Abstrahlen des austretenden Lichtes durch die Heckscheibe zu verhindern.

Nach einer bevorzugten Ausbildung der Erfindung hintergreift der die Leuchte aufnehmende Teil des Aufnahmegehäuses eine die Heckscheibe mit der Fahrzeugkarosserie verbindende Befestigungseinrichtung, so daß der in diesen Bereich vorhandene Bauraum optimal ausgenutzt wird.

Weiterhin kann das Aufnahmegehäuse zwischen der Innenwandung der Karosserie und einem Verkleidungsteil angeordnet werden, wobei dann vorzugsweise das Verkleidungsteil derart geteilt ausgebildet ist, daß ein Auswechseln der Leuchte auf einfachem Wege geschehen kann.

Das Aufnahmegehäuse der Leuchte kann des weiteren sowohl an der Karosserie-Innenwandung der Karosserie, beispielsweise dem Dachrahmen, der Heckklappe oder der Hutablage, als auch an der Scheibe selbst befestigt sein.

Nachfolgend wird die Erfindung anhand eines Ausführungsbeispiels näher beschrieben. Die zugehörigen Zeichnungen zeigen:
- Figur 1: einen Schnitt durch eine am Dachrahmen befestigte Leuchtenanordnung und
- Figur 2: einen Schnitt durch eine an einer Hutablage befestigte Leuchtenanordnung.

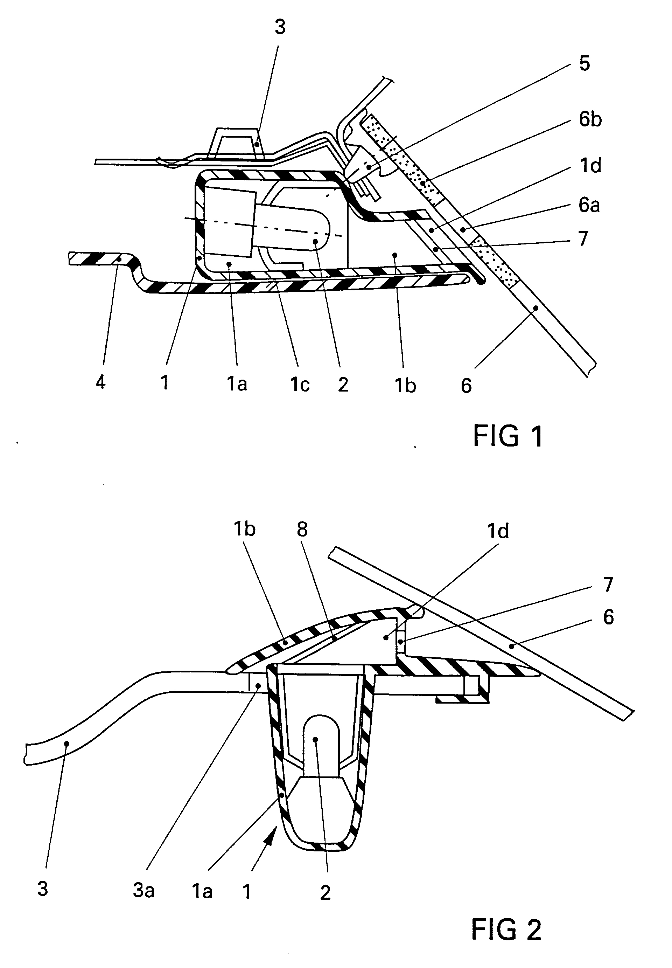

Die in der Figur 1 dargestellte Leuchtenanordnung besteht aus einem Aufnahmegehäuse 1, das in seinem Teil 1a eine Leuchte 2 aufnimmt und dessen Teil 1b den Lichtaustrittskanal zur Heckscheibe 6 hin bildet, der von einer Lichtscheibe 7 verschlossen ist. Zur Aufnahme der Leuchte 2 weist der Teil 1a einen größeren Querschnitt als der Teil 1b auf. Damit kann der den Lichtaustrittskanal bildende Teil 1b im Bereich der die Heckscheibe 6 mit der Fahrzeugkarosserie, im Ausführungsbeispiel den Dachrahmen 3, verbindenden Befestigungseinrichtung 5 angeordnet werden. Der die Leuchte 2 aufnehmende Teil 1a hintergreift dann die Befestigungseinrichtung 5, wodurch der in diesem Bereich vorhandene Bauraum optimal ausgenutzt wird. Der dem Fahrzeuginnenraum zugewandte Bereich 1c des Aufnahmegehäuses ist im wesentlichen als ebene Fläche ausgebildet, wodurch das Aufnahmegehäuse ohne die Ausbildung von großen Ausbuchtungen von dem Verkleidungsteil 4 überdeckt werden kann.

Die Lichtaustrittsöffnung 1d des Teils 1b ist den Design- oder Gesetzesanforderungen entsprechend frei wählbar und korrespondiert mit dem lichtdurchlässigen Bereich 6a der Heckscheibe, der in dem heute schon in den meisten Fahrzeuge vorgesehen abgedunkelten Bereich 6b der Heckscheibe zur Abdeckung der Befestigungseinrichtung 5 vorgesehen ist. Die Befestigung des Aufnahmegehäuses 1 erfolgt im Ausführungsbeispiel direkt an der Karosserie-Innenwandung über mindestens eine nicht dargestellte Schraubverbindung mittig zur Heckscheibe 6. Es ist jedoch auch eine Befestigung des Aufnahmegehäuses 1 an der Heckscheibe denkbar.

Die in Figur 2 dargestellte Leuchteneinrichtung weist ein geteiltes Aufnahmegehäuse 1 auf, dessen die Leuchte 2 aufnehmendes Teil 1a unterhalb der Hutablage 3 des Kraftfahrzeuges angeordnet und durch eine Öffnung 3a der Hutablage geführt ist. Auf der Hutablage 3 liegt das den Lichtkanal bildende Teil 1b, dessen Lichtaustrittsöffnung 1d, die ebenfalls von einer Lichtscheibe 7 verschlossen ist, in Richtung der Heckscheibe 6 gerichtet ist.

Außerdem weist das den Lichtkanal bildende Teil 1b einen Spiegel 8 zur Umlenkung des von der Leuchte 2 abgegebenen Lichtes in Richtung der Lichtaustrittsöffnung 1d auf. Die Befestigung des Aufnahmegehäuses 1 an der Hutablage 3 wird hier über eine formschlüssige Verbindung des den Lichtaustrittskanal bildenden Teils 1b mit der Hutablage 3 geschaffen. Es sind jedoch andere Befestigungsarten denkbar.

Der Vorteil dieser Anordnung der Leuchteneinrichtung besteht darin, daß tatsächlich nur das den Lichtaustrittskanal bildende Teil 1b sichtbar angeordnet ist, durch seine möglichen Freiheitsgrade jedoch formschön an vorhandene Konturen anpaßbar ist. Auch die Sicht nach hinten wird hier kaum behindert.

### BEZUGSZEICHEN

- 1: Aufnahmegehäuse
- 1a: die Leuchte aufnehmender Teil
- 1b: den Lichtaustrittskanal bildender Teil
- 1c: dem Fahrzeuginnenraum zugewandter Bereich
- 1d: Lichtaustrittsöffnung
- 2: Leuchte
- 3: Innenwandung, Dachrahmen
- 4: Verkleidungsteile
- 5: Befestigungseinrichtung
- 6: Heckscheibe
- 6a: lichtdurchlässiger Bereich
- 6b: abgedunkelter Bereich
- 7: Lichtscheibe
- 8: Spiegel

## Patentansprüche

1. Leuchteneinrichtung für Kraftfahrzeuge mit einer Leuchte und einem die Leuchte aufnehmenden Aufnahmegehäuse, dessen Lichtaustrittsöffnung der Heckscheibe zugewandt ist und welches an einer Innenwandung des Fahrzeuges angeordnet ist, das Aufnahmegehäuse (1) aus einem die Leuchte (2) aufnehmenden Teil (1a) und einem den Lichtaustrittskanal bildenden Teil (1b) besteht, wobei das die Leuchte (2) aufnehmende Teil (1a) einen größeren Querschnitt als sein den Lichtaustrittskanal bildendes Teil (1b) aufweist, **dadurch gekennzeichnet, daß** die Lichtaustrittsöffnung des Aufnahmegehäuses (1) mit einem lichtdurchlässigen Bereich (6a) im abgedunkelten oder gefärbten Bereich (6b) der Heckscheibe korrespondiert, so daß das Aufnahmegehäuse nicht abdichtend an der Heckscheibe angeordnet werden muß.

2. Leuchteneinrichtung nach Anspruch 1, **dadurch gekennzeichnet, daß** das Aufnahmegehäuse (1) zwischen der Innenwandung (3), des Fahrzeuges und einem Verkleidungsteil (4) angeordnet ist.

3. Leuchteneinrichtung nach einem der Ansprüche 1 bis 2, **dadurch gekennzeichnet, daß** das Aufnahmegehäuse (1) eine Befestigungseinrichtung (5) der Heckscheibe (6) umgreift.

4. Leuchteneinrichtung nach Anspruch 1, **dadurch gekennzeichnet, daß** ein dem Fahrzeuginnenraum zugewandter Bereich (1c) des Aufnahmegehäuses (1) eine im wesentlichen ebene Fläche bildet.

5. Leuchteneinrichtung nach einem der Ansprüche 1 bis 4, **dadurch gekennzeichnet, daß** das Aufnahmegehäuse (1) an einer Innenwandung des Fahrzeuges, vorzugsweise dem Dachrahmen, befestigt ist.

6. Leuchteneinrichtung nach einem der Ansprüche 1 bis 4, **dadurch gekennzeichnet, daß** das Aufnahmegehäuse (1) an der Heckscheibe (6) befestigt ist.

7. Leuchteneinrichtung nach einem der Ansprüche 1 bis 6, **dadurch gekennzeichnet, daß** das die Leuchte (2) aufnehmende Teil (1a) und das den Lichtkanal bildende Teil (1b) des Aufnahmegehäuses (1) aus unterschiedlichen Bauteilen gebildet ist

8. Leuchteneinrichtung für Kraftfahrzeuge mit einer Leuchte und einem die Leuchte aufnehmenden Aufnahmegehäuse, dessen Lichtaustrittsöffnung der Heckscheibe zugewandt ist und welches an einer Innenwandung des Fahrzeuges angeordnet ist, das Aufnahmegehäuse (1) aus einem die Leuchte (2) aufnehmenden Teil (1a) und einem den Lichtaustrittskanal bildenden Teil (1b) besteht, wobei das die Leuchte (29 aufnehmende Teil (1a) einen größeren Querschnitt als sein den Lichtaustrittskanal bildendes Teil (1b) aufweist und das die Leuchte aufnehmende Teil (1a) und das den Lichtkanal bildende Teil (1b) in einem Winkel zueinander angeordnet sind, **dadurch gekennzeichnet, daß** das Teil (1b) einen separaten Spiegel (8) zur Ablenkung des von der Leuchte (2) abgegebenen Lichtes aufweist und daß das die Leuchte (2) aufnehmende Teil (1a) und das den Lichtkanal bildende Teil (1b) des Aufnahmegehäuses (1) aus unterschiedlichen Bauteilen gebildet ist.

## Claims

1. Lamp arrangement for motor vehicles, having a lamp and a retaining housing which accommodates the lamp and whose light-outlet opening faces the rear window and which is arranged on an inner wall of the vehicle, the said retaining housing (1) consisting of a part (1a) which holds the lamp (2) and a part (1b) which forms the light-outlet channel, the part (1a) which holds the lamp (2) having a larger cross section than its part (1b) which forms the light-outlet channel, **characterized in that** the light-outlet opening of the retaining housing (1) corresponds with a transparent region (6a) in the darkened or coloured region (6b) of the rear window, and so the retaining housing has to be arranged in a non-sealing manner on the rear window.

2. Lamp arrangement according to Claim 1, **characterized in that** the retaining housing (1) is arranged between the inner wall (3) of the vehicle and a panelling part (4).

3. Lamp arrangement according to either of Claims 1 and 2, **characterized in that** the retaining housing (1) fits around a fastening device (5) of the rear window (6).

4. Lamp arrangement according to Claim 1, **characterized in that** a region (1c) of the retaining housing (1), which region faces the vehicle interior, forms an essentially planar surface.

5. Lamp arrangement according to one of Claims 1 to 4, **characterized in that** the retaining housing (1) is fastened to an inner wall of the vehicle, preferably to the roof frame.

6. Lamp arrangement according to one of Claims 1 to 4, **characterized in that** the retaining housing (1) is fastened to the rear window (6).

7. Lamp arrangement according to one of Claims 1 to 6, **characterized in that** the part (1a) holding the lamp (2) and that part (1b) of the retaining housing (1) which forms the light channel are formed from different components.

8. Lamp arrangement for motor vehicles, having a lamp and a retaining housing which accommodates the lamp and whose light-outlet opening faces the rear window and which is arranged on an inner wall of the vehicle, the said retaining housing (1) consisting of a part (1a) which holds the lamp (2) and a part (1b) which forms the light-outlet channel, the part (1a) which holds the lamp (2) having a larger cross section than its part (1b) which forms the light-outlet channel, and the part (1a) holding the lamp and the part (1b) forming the light channel being arranged at an angle to each other, **characterized in that** the part (1b) has a separate mirror (8) for deflecting the light emitted by the lamp (2), and **in that** the part (1a) which holds the lamp (2) and that part (1b) of the receiving housing (1) which forms the light channel are formed from different components.

## Revendications

1. Dispositif de feux pour véhicule avec un feu et un boîtier de logement qui reçoit le feu et dont l'orifice de sortie de la lumière est dirigé vers la vitre arrière et qui est disposé sur une paroi intérieure du véhicule, le boîtier de logement (1) est composé d'une partie (1a) qui reçoit le feu (2) et d'une partie (1b) qui forme le conduit de sortie de la lumière, la partie (1a) qui reçoit le feu (2) présentant une section supérieure à la partie (1b) qui forme le conduit de sortie de la lumière, **caractérisé en ce que** l'orifice de sortie de la lumière du boîtier de logement (1) correspond à une zone (6a) laissant passer la lumière dans la zone (6b) rendue foncée ou colorée de la vitre arrière de manière à ce qu'il ne soit pas nécessaire de plaquer le boîtier de logement contre la vitre arrière.

2. Dispositif de feux selon la revendication 1, **caractérisé en ce que** le boîtier de logement (1) est disposé entre la paroi intérieure (3) du véhicule et une partie de l'habillage (4).

3. Dispositif de feux selon l'une des revendications 1 à 2, **caractérisé en ce que** le boîtier de logement (1) englobe un dispositif de fixation (5) à la vitre arrière (6).

4. Dispositif de feux selon la revendication 1, **caractérisé en ce qu'**une zone (1c) du boîtier de logement (1) qui est dirigée vers l'intérieur du véhicule forme une surface essentiellement plane.

5. Dispositif de feux selon l'une des revendications 1 à 4, **caractérisé en ce que** le boîtier de logement (1) est fixé à une paroi intérieure du véhicule, de préférence au cadre du toit.

6. Dispositif de feux selon l'une des revendications 1 à 4, **caractérisé en ce que** le boîtier de logement (1) est fixé à la vitre arrière (6).

7. Dispositif de feux selon l'une des revendications 1 à 6, **caractérisé en ce que** la partie (1a) qui reçoit le feu (2) et la partie (1b) qui forme le conduit de lumière du boîtier de logement (1) sont formées de différents composants.

8. Dispositif de feux pour véhicule avec un feu et un boîtier de logement qui reçoit le feu et dont l'orifice de sortie de la lumière est dirigé vers la vitre arrière et qui est disposé sur une paroi intérieure du véhicule, le boîtier de logement (1) est composé d'une partie (1a) qui reçoit le feu (2) et d'une partie (1b) qui forme le conduit de sortie de la lumière, la partie (1a) qui reçoit le feu (2) présentant une section supérieure à la partie (1b) qui forme le conduit de sortie de la lumière et la partie (1a) qui reçoit le feu et la partie (1b) qui forme le conduit de lumière sont disposées selon un angle l'une par rapport à l'autre, **caractérisé en ce que** la partie (1b) présente un miroir (8) séparé pour dévier la lumière émise par le feu (2) et que la partie (1a) qui reçoit le feu (2) et la partie (1b) qui forme le conduit de lumière du boîtier de logement (1) sont formées de différents composants.
